# EUROPEAN PATENT APPLICATION

(11) **EP 1 463 054 A2**
(43) Date of publication of application: **29.09.2004**
(21) Application number: 04251615.3
(22) Date of filing: 19.03.2004
(51) Int. Cl.: G11B 20/00

(54) **Method, system and program for authenticating recording medium, and computer readable recording medium**

(30) Priority: 25.03.2003 JP 2003083012; 23.06.2003 JP 2003177822; 19.09.2003 JP 2003328640
(71) Applicant: Ricoh Company Ltd., Tokyo 143-8555 (JP)
(72) Inventor: Noda, Eiji, Tokyo 143-8555 (JP); Kitamura, Yuuji, Tokyo 143-8555 (JP); Watanabe, Takeashi, Tokyo 143-8555 (JP)
(74) Representative: Mounteney, Simon James

(57) **Abstract**

A disk authentication method, system, program, and a computer readable recording medium containing the program. A main controller of a host computer executes a data acquisition step for acquiring, from an optical disk, unique data that is recorded on an information track on the optical disk in accordance with a predetermined rule and an authentication step for authenticating the optical disk based on the unique data acquired in the data acquisition step. The disk authentication method thus prevents data illegally copied onto the optical disk from being used.

## Description

This application claims priority to Japanese patent applications No. 2003-083012 filed on March 25, 2003, No. 2003-328640 filed on September 19, 2003, and No. 2003-177822 filed on June 23, 2003 in the Japan Patent Office, the entire contents of which are incorporated by reference herein.

### FIELD OF THE INVENTION

The present invention relates to a method, system, and computer program for authenticating a recording medium as to whether data recorded onto the recording medium such as an optical disk is illegally copied. The present invention also relates to a computer readable recording medium recording the computer program.

### BACKGROUND OF THE INVENTION

Optical disks (recording media), such as CDs and CD-ROMs, for recording information are in widespread use. The optical disks are read-only optical disks, and are produced in bulk in plants.

The read-only optical disk is manufactured in the following way. A train of pits formed on an original master disk is transferred to a stamper using a mastering apparatus, a disk is molded from the stamper, and the disk is then coated with a reflective layer, a protective layer, etc. Time information (header address, namely, physical address) is recorded in the form of pits together with digital data on the optical disk. The digital data is replayed in accordance with the time information recorded in the form of the pits.

CD-recordable (CD-R) disks and CD-rewritable (CD-RW) disks are also in widespread use.

These optical disks have grooves that extend over the entire surface thereof and have time information recorded therein. The disk having the grooves formed thereon is coated with a recording layer (such as a colorant in the CD-R disk and a phase change film in the CD-RW disk), a reflective layer, a protective layer, etc. Pits are written on the disk using a CD-R/RW writer so that the pits are synchronized with the recorded time information. The header address (time information) and data are thus recorded.

In a CD format, a group of a lead-in area (LIA), a lead-out area (LOA), a program area (PA) interposed between the LIA and the LOA is referred to as a session. A disk having a plurality of sessions is called a multi-session disk.

Some types of disks have a data structure in which prepits are formed in a portion of a replay-only area (read-only area). CD-R disks and CD-RW disks, having such a structure, are called hybrid disks.

Information is stored in an application specific format in the optical disks, such as the CD-R disk and the CD-RW disk. For example, music is recorded in a CD format, and data is recorded in the ISO 9660 format.

When the ISO 9660 format is used, data recording is performed on a session-by-session basis. The lead-in area and the lead-out area must also be recorded. Even to record a small file, an overhead of 10 Mbytes or more is involved.

A format called universal disk format (UDF) working in a random-access fashion is now available.

The UDF allows data to be recorded by packet. The packet has a size as large as 64 Kbytes (32 blocks). As with the ISO 9660 format, an optical CD-RW disk having data recorded in the UDF is replayable on an information replay device such as a CD-ROM device.

Information recorded in the replay-only optical disk (including a hybrid disk having partially a replay-only area) is digital, and free from collapse through copying.

However, the replay-only optical disks have a drawback that information such as data and application programs recorded on the optical disk is subject to unauthorized copying and unauthorized use.

### SUMMARY OF THE INVENTION

Accordingly, it is an object of the present invention to prevent unauthorized copied data from being used.

The present invention in one aspect relates to a method for authenticating a recording medium, and includes a data acquisition step for acquiring, from the recording medium, unique data that is recorded on an information track on the recording medium in accordance with a predetermined rule, and an authentication step for authenticating the recording medium based on the unique data acquired in the data acquisition step.

Preferably, the predetermined rule is based on a plurality of types of recording methods.

Preferably, the plurality of types of recording methods include an uninterrupted recording method and an incremental recording method.

Preferably, the uninterrupted recording method is a track at once recording method, and the incremental recording method is a packet write recording method.

Preferably, the unique data includes information for identifying the recording method.

Preferably, he unique data includes at least one of data in a track descriptor unit and data in a sub-code control.

The unique data may include data within a runout.

The unique data may include data within a predetermined packet.

The unique data may include data that is recorded in multiple sessions.

The unique data may include data that is recorded in a variable packet.

The present invention in another aspect relates to a method for authenticating a recording medium, and includes data acquisition step for acquiring, from the recording medium, unique data that is recorded in a variable packet on an information track on the recording medium in accordance with a predetermined rule, and an authentication step for authenticating the recording medium based on the unique data acquired in the data acquisition step.

Preferably, the recording medium has, in a first session, a second track as a dummy track not present in the ISO 9660 file system and wherein the information track comprises an LIA and a PMA.

Preferably, the data includes track information.

Preferably, the track information identifies a recording method of the track.

Preferably, the track information identifies a recording position of the track.

Preferably, the recording medium records data in multiple sessions.

The information track may include a PMA and a second track that is additionally recorded.

The unique data of the second track that is recorded may include a disk ID.

The present invention in yet another aspect relates to a computer program for causing a computer to perform the data acquisition step and the authentication step.

The present invention in a further aspect relates to a computer readable recording medium storing a computer program for causing a computer to perform the data acquisition step and the authentication step.

Preferably, the computer readable recording medium includes a read-only memory area and a read and write memory area, and stores, on the read and write area, a computer program for causing a computer to perform the data acquisition step and the authentication step.

The authentication method of the recording medium, the computer program, and the computer readable recording medium thus prevent data illegally copied onto the recording medium such as an optical disk from being used.

The present invention in a further aspect relates to an optical disk drive system which includes a memory and a processor. The memory stores a program, and the processor is configured to execute the program stored in the memory. The program stored in the memory includes an instruction for authenticating a recording medium, including the steps of acquiring and authenticating. The acquiring step acquires, from the recording medium, unique data that is recorded on an information track on the recording medium in accordance with a predetermined rule. The authenticating step authenticates the recording medium based on the unique data acquired in the data acquisition step.

### BRIEF DESCRIPTION OF THE DRAWINGS

A more complete appreciation of the disclosure and many of the attendant advantages thereof will be readily obtained as the same becomes better understood by reference to the following detailed description and the accompanying drawings, wherein:
Fig. 1 is a block diagram illustrating the internal structure of an optical disk device;
Fig. 2 is a block diagram illustrating an optical drive system that executes an authentication process of a recording medium in accordance with one preferred embodiment of the present invention;
Fig. 3 illustrates an example of CD format of the optical device illustrated in Fig. 1;
Fig. 4 illustrates a format within a track of the CD format illustrated in Fig. 3;
Fig. 5 illustrates an internal format of a run-out block, a link block, and run-in block illustrated in Fig. 4;
Fig. 6 illustrates a format within a track descriptor block illustrated in Fig. 4;
Fig. 7 is a flowchart illustrating a process in an optical disk operation in an optical disk system.
Fig. 8 is a flowchart illustrating an authentication process of the optical disk illustrated in Fig. 7;
Fig. 9 is a continuation of the flowchart of Fig. 8;
Fig. 10 is a continuation of the flowchart of Fig. 9;
Fig. 11 is a continuation of the flowchart of Fig. 10;
Fig. 12 is another continuation of the flowchart of Fig. 8;
Fig. 13 is a continuation of the flowchart of Fig. 12;
Fig. 14 is a continuation of the flowchart of Fig. 13;
Fig. 15 illustrates a format of an optical disk having a first session with a first track that is continuously recorded in a copy protective manner;
Figs. 16A and 16B illustrate a format of an optical disk having a first session with a first track that is continuously recorded in a copy protected manner and a second session with a second track that is continuously recorded in a copy protected manner;
Fig. 17 illustrates a format of an optical disk having a first session with a first track that is continuously recorded in a copy protected manner and with a second track that is continuously recorded in a copy protected manner;
Fig. 18 illustrates a CD format of an optical disk of a sixth preferred embodiment of the present invention;
Fig. 19 is a flowchart illustrating an authentication process of the optical disk of Fig. 18;

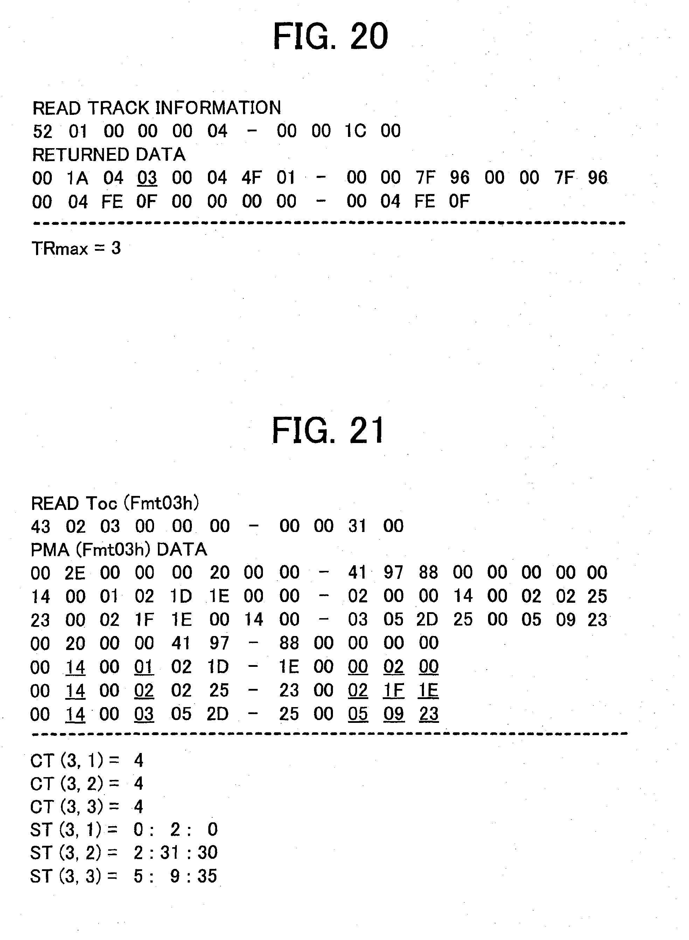

Fig. 20 illustrates a return value in response to a read disk information command and the maximum number of tracks obtained from the return value;
Fig. 21 illustrates a return value in response to a read TOC command and track information of PMA acquired using the return value;

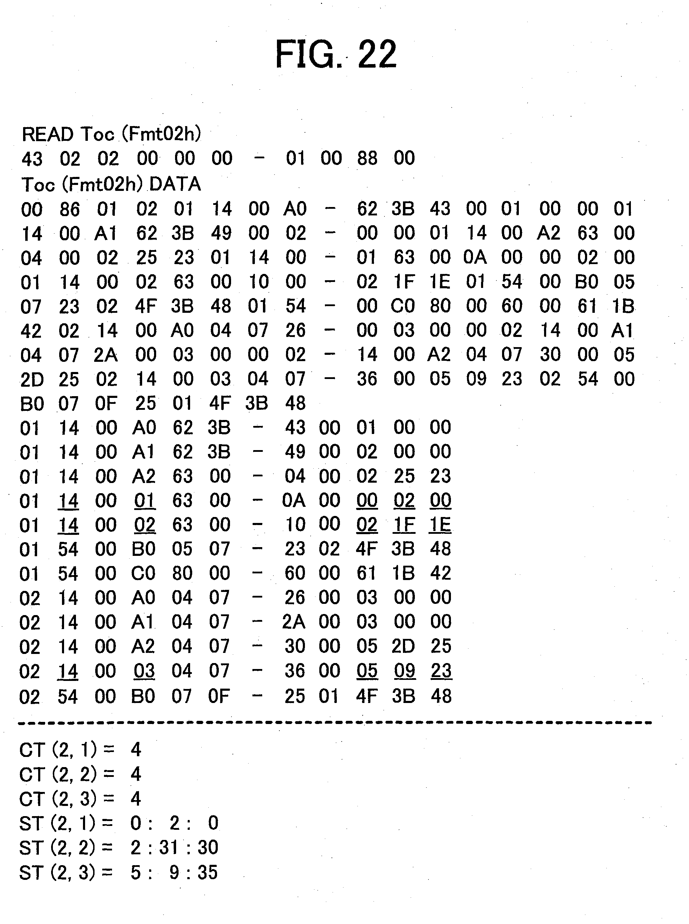

Fig. 22 illustrates a return value in response to a read TOC command and track information of TOC acquired using the return value;
Fig. 23 illustrates a CD format of an optical disk in accordance with a seventh preferred embodiment of the present invention;
Fig. 24 is a flowchart of an operation to record user data in a second session of the optical disk of Fig. 23; and
Fig. 25 is a flowchart illustrating an authentication process of the optical disk of Fig. 23.

### DESCRIPTION OF THE PREFERRED EMBODIMENTS

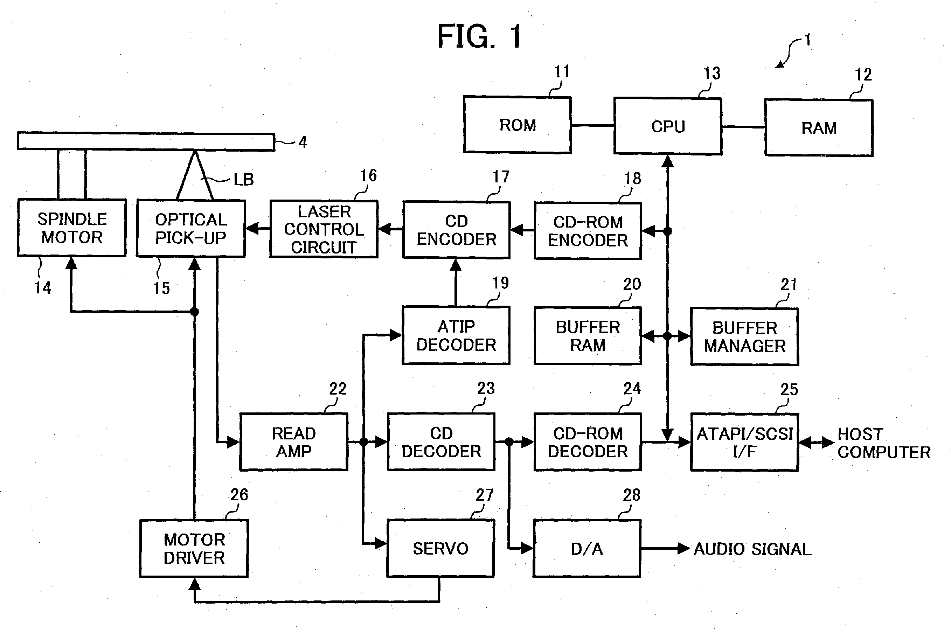

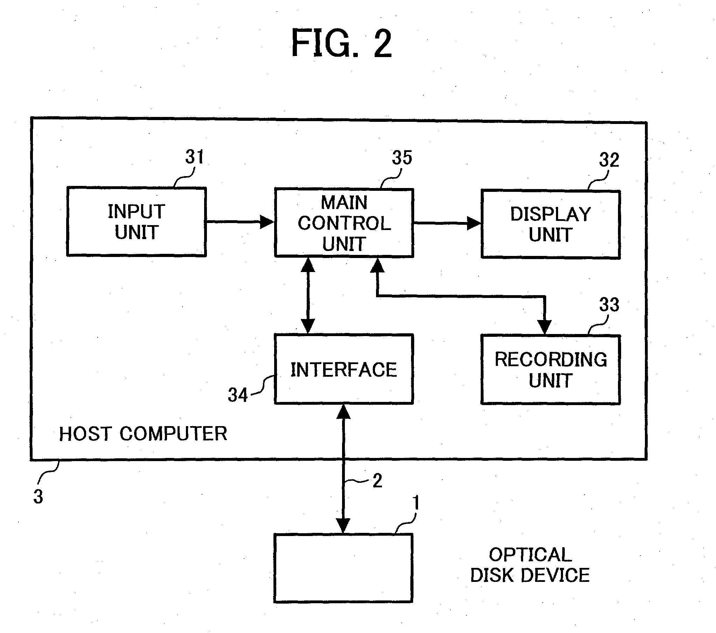

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, particularly to Figs. 1 and 2, an optical disk device 1 and an exemplary optical disk drive system including the optical disk device 1, according to an embodiment of the present invention, are explained. Fig. 1 is a block diagram illustrating the internal structure of the optical disk device 1 and Fig. 2 is a block diagram of the optical disk drive system that authenticates an optical disk as a recording medium in accordance with an embodiment of the present invention.

Optical disks such as CD-ROM, CD-R, CD-RW, and CD-RAM are used as recording media for recording a large amount of data (information).

CD-R disks, and CD-RW disks are writable (recordable) compact disks (CDs).

The CD-R disks are writable one time only. The CD-R is also referred to CD-Write Once.

The CD-RW (CD-rewritable) is writable for a plurality of times. Optical disks, such as CD-R or CD-RW, are used in an optical disk drive system (information processing system) shown in Fig. 2.

As shown, the optical disk drive system includes a host computer (information processing apparatus) 3, and the optical disk device (optical disk drive) 1 connected to the host computer through a communication cable 2 for data exchange.

The host computer 3 includes a main controller 35, an interface 34, an interface 34, a recording device (hard disk drive) 33, an input unit 31, a display unit 32, etc.

The main controller 35, including a known microcomputer (not shown), and a known main memory (not shown), generally controls the host computer 3.

The interface 34 is a two-way communication interface with the optical disk device 1, and may be a standard interface complying with the ATAPI or SCSI standard.

The interface 34 is connected to an ATAPI/SCSI interface 25 of the optical disk device 1. A communication link between the interfaces is not limited to a wired type using a communication cable (SCSI cable) 2, and may be a wireless type such as an infrared link.

The recording device 33 stores a program written in a code readable by the microcomputer of the main controller 35. When the host computer 3 is powered on, the program is loaded onto a main memory of the main controller 35.

The display unit 32 includes a display (not shown) such as a cathode-ray tube (CRT), a liquid-crystal display (LCD), or a plasma display panel (PDP), and displays various information from the main controller 35.

The input unit 31 includes at least one input medium (not shown) such as a keyboard, a mouse, and a pointing device, and notifies the main controller 35 of various information input by a user. The information from the input medium may be input using a wireless link. For example, a CRT with a touch panel attached thereto is available as an apparatus into which the display unit 32 and the input unit 31 are integrated.

An operating system (OS) is installed in the host computer 3. All devices constituting the host computer 3 are controlled by the OS.

As shown in Fig. 1, the optical disk device 1 includes a spindle motor 14, an optical pickup 15, a motor driver 26, a read amplifier 22, a servo 27, a CD decoder 23, an ATIP decoder 19, a laser control circuit (laser controller) 16, a CD encoder 17, a CD-ROM encoder 18, a buffer RAM 20, a buffer manager 21, a CD-ROM decoder 24, the ATAPI/SCSI interface 25, a D/A converter 28, an ROM 11, a CPU 13, an RAM 12, etc. The optical disk device 1 records information to and replays information from an optical disk 4. As shown, each arrow-headed line connecting blocks shows the direction of data flow.

The ROM 11 stores a control program written in a code readable by the CPU 13. When the optical disk device 1 is powered on, the control program is loaded onto a known main memory, and the CPU 13 controls the operation of each of the above blocks while temporarily storing data and the like required in the control of each block in the RAM 12.

The structure and operation of the optical disk device 1 are discussed below.

The optical disk 4 is driven by the spindle motor 14. The spindle motor 14 is controlled by the motor driver 26 and the servo 27 so that the linear velocity of the spindle motor 14 becomes constant. The linear velocity is controllable in a stepwise manner.

The optical pickup 15 includes elements (not shown) such as a known semiconductor laser light source (LD), an optical system, a focus actuator, a track actuator, a photosensitive device (PD), and a position sensor. The optical pickup 15 directs a laser beam LB to the optical disk 4. The optical pickup 15 is moved in a radial direction across the optical disk 4 by a seek motor. The focus actuator, the track actuator, and the seek motor are controlled by the motor driver 26 and the servo 27 in accordance with a signal from the photosensitive device and the position sensor so that the laser beam LB is directed to a target position on the optical disk 4.

During a read operation, a replay signal obtained from the optical pickup 15 is amplified and binarized by the read amplifier 22, and then input to the CD decoder 23. The binarized data is eight-to-fourteen (EFM) demodulated by the CD decoder 23. The recording data has been EFM modulated. In the EFM modulation, eight bit data is converted into fourteen bit data, to which three link bits are attached. Resulting data has a total of seventeen bits. The link bits are attached so that the average number of "1s" and the average number of "0s" are equalized to each other to suppress DC component. This arrangement controls variations in the slice level of a DC cut replay signal.

The demodulated data is subjected to a deinterleave process and an error correction process. The resulting data is then input to the CD-ROM decoder 24, which further performs an error correction process on the data to heighten data reliability. The data that has error corrected twice is temporarily stored in the buffer RAM 20 by the buffer manager 21. When the data becomes complete as sector data in the buffer RAM 20, the data is transmitted to the host computer 3 through the ATAPI/SCSI interface 25 at a time.

If the data is music, the data output from the CD decoder 23 is input to the D/A converter 28, which in turn outputs the data in the form of an analog audio output signal "Audio".

During a write operation, the buffer manager 21 temporarily stores data coming in from the host computer 3 in the buffer RAM 20. When a predetermined amount of data from the host computer 3 is stored in the buffer RAM 20, a write operation starts. Before the write operation, a laser beam spot must be directed to a write start point. The write start point is determined by a wobble signal that is engraved beforehand on the optical disk 4 with a track extending in a serpentine fashion.

The wobble signal contain absolute time information called ATIP, and the absolute time information is retrieved by the ATIP decoder 19. A synchronization signal generated by the ATIP decoder 19, input to the CD encoder 17, enables data to be written on the optical disk 4 at a precise position. The data of the buffer RAM 20 is subject to an error code attachment process and an interleave process in the CD-ROM encoder 18 and the CD encoder 17. The resulting data is then recorded onto the optical disk 4 through the laser control circuit 16 and the optical pickup 15.

The EFM modulated data in a bit stream drives the laser at a channel bit rate of 4.3218 Mbps (standard rate). The recording data forms an EFM frame every 588 channel bits. A channel clock refers to a clock having a frequency of the channel bit.

The main controller 35 in the host computer 3 acquires a program that is recorded on an ROM area (a read-only memory area or a replay-only memory area) of the optical disk 4 by the optical disk device 1, and performs an authentication determination process of the optical disk 4 by executing the program.

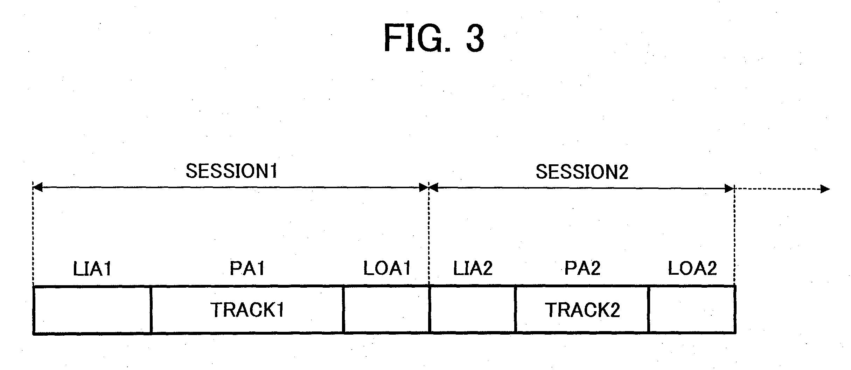

Fig. 3 illustrates an example of a CD format of the optical disk 4 shown in Fig. 1.

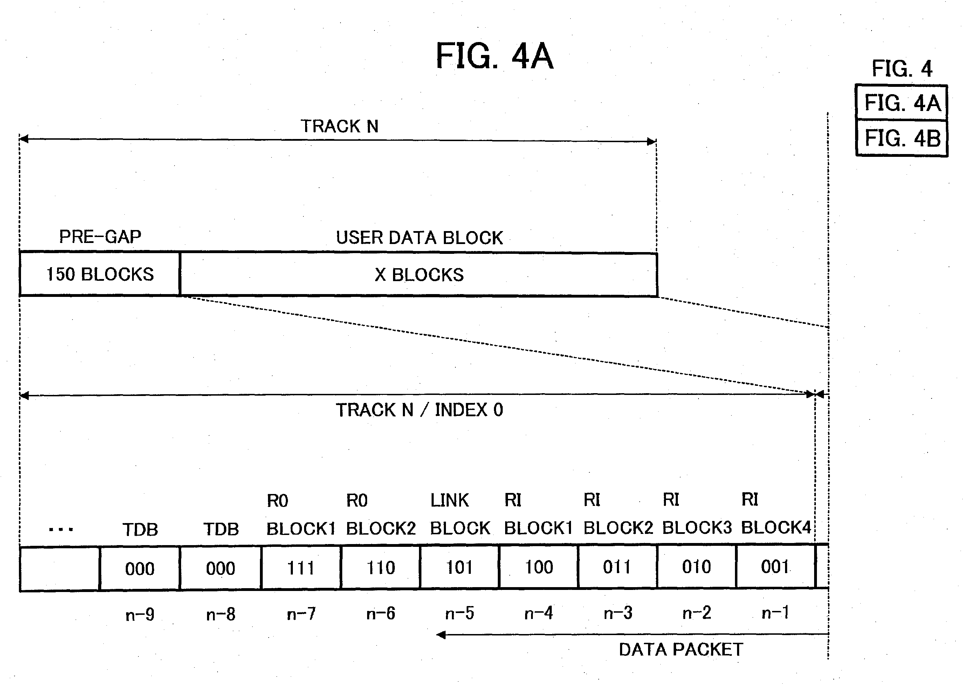

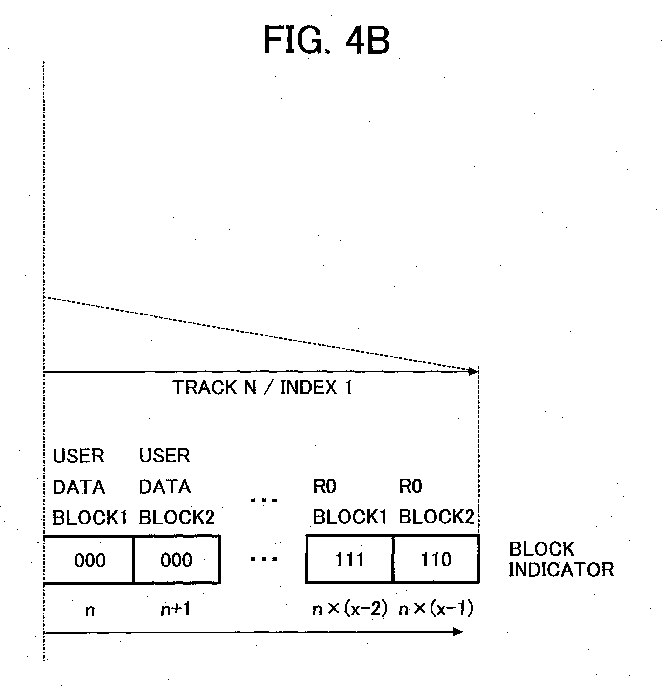

Fig. 4 illustrates an in-track format of the CD format of Fig. 3.

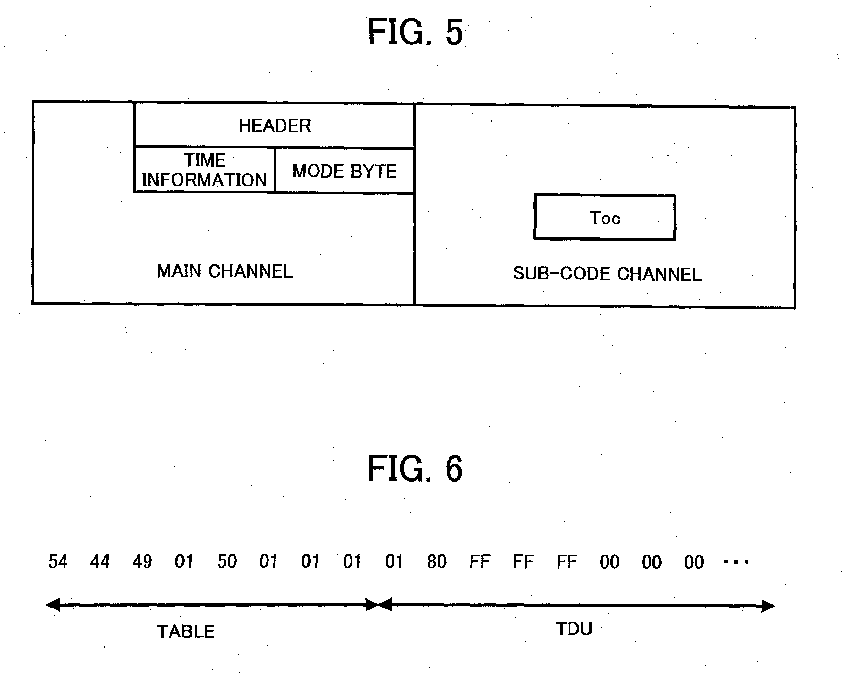

Fig. 5 illustrates the internal format of a runout (RO) block (RO block), a link block, and a run-in (RI) block illustrated in Fig. 4.

Fig. 6 illustrates a format of a track descriptor block of Fig. 4.

As shown in Fig. 3, the optical disk 4 includes a session 1 and a session 2. The session 1 is a read-only memory area, and the session 2 is a random-access memory area. A program of the present invention is stored in the session 1.

Each session includes a lead-in area (LIA), a program area (PA), and a lead-out area (LIA). The PA includes at least one track.

Two types of information recording methods for recording on a per packet basis are available, namely, a fixed packet (FP) recording method for recording data on a fixed size packet basis, and a valuable packet (VP) recording method for recording data in a packet size different dependent on the size of data to be recorded.

The PA includes at least one track. As shown in Fig. 4, each track includes at the head portion thereof a pre-gap (of 150 blocks, for example) containing a track descriptor block (TDB), a runout (RO) block, a link block, a run-in (RI) block, etc. The pre-gap is followed by a user data block.

As shown in Fig. 5, the RO block, the link block, and the RI block are distinguished from the user data block by a block indicator recorded in a mode byte of a header of a main channel (block header). Also recorded in the header is time information.

As shown in Fig. 6, an attribute of the track is recorded in a track descriptor unit (TDU) of a user data field of the TDB.

Recorded in the sub-code channel of the PA are a control and ADR representing a type of information on the track in addition to time information representing a relative address within the track and an absolute address within the track.

The control and ADR representing the type of the information on the track are also recorded on a table of contents (TOC) of the LIA.

In the case of data tracks recorded continuously in a copy protective manner, during the write mode, the TDU is "80 (=1000-0000)", and the control is "4 (=0100)".

In the case of data tracks recorded continuously in a VP in a copy protective manner, the TDU is "90 (=1001-0000)", and the control is "5 (=0101).

The process of the optical disk system in accordance with the present invention will now be discussed.

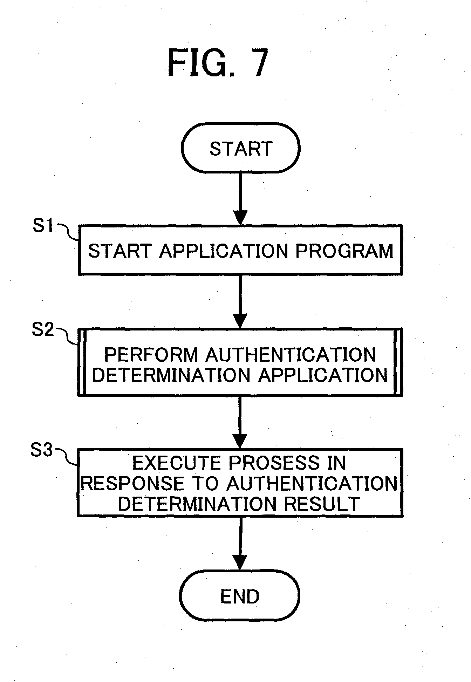

Fig. 7 is a flowchart of the process of the optical disk system.

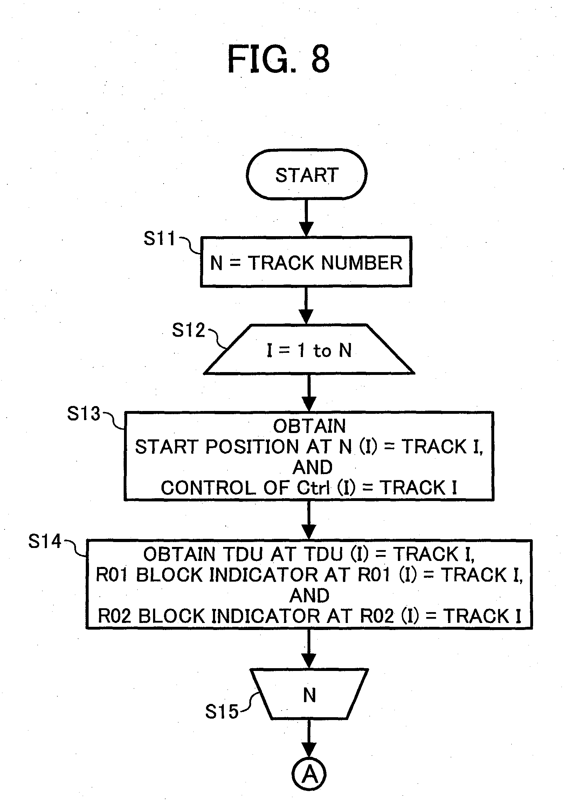

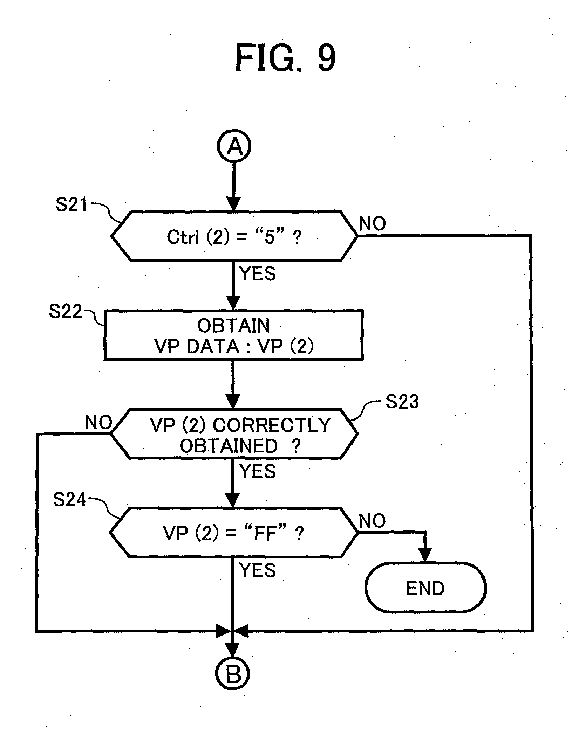

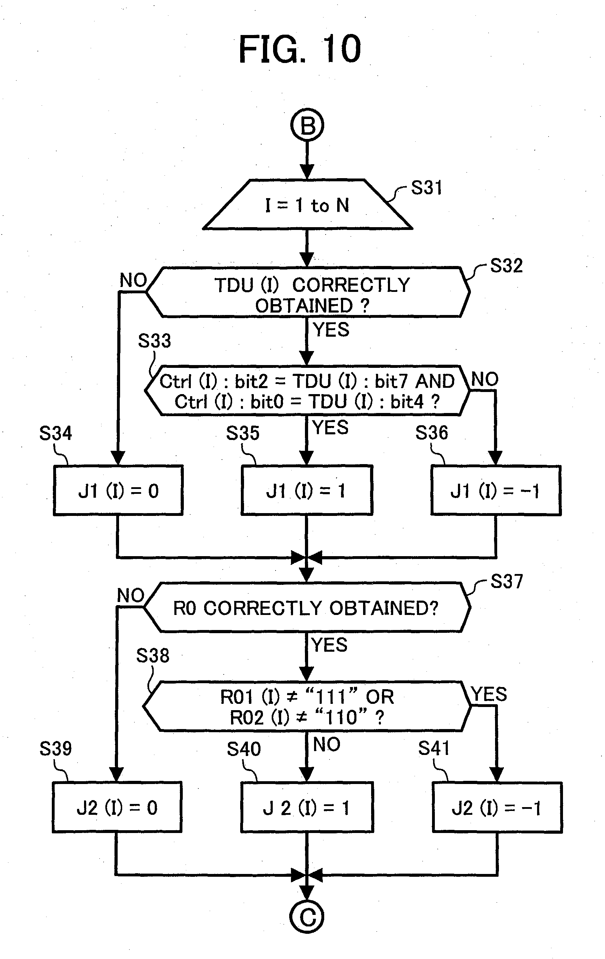

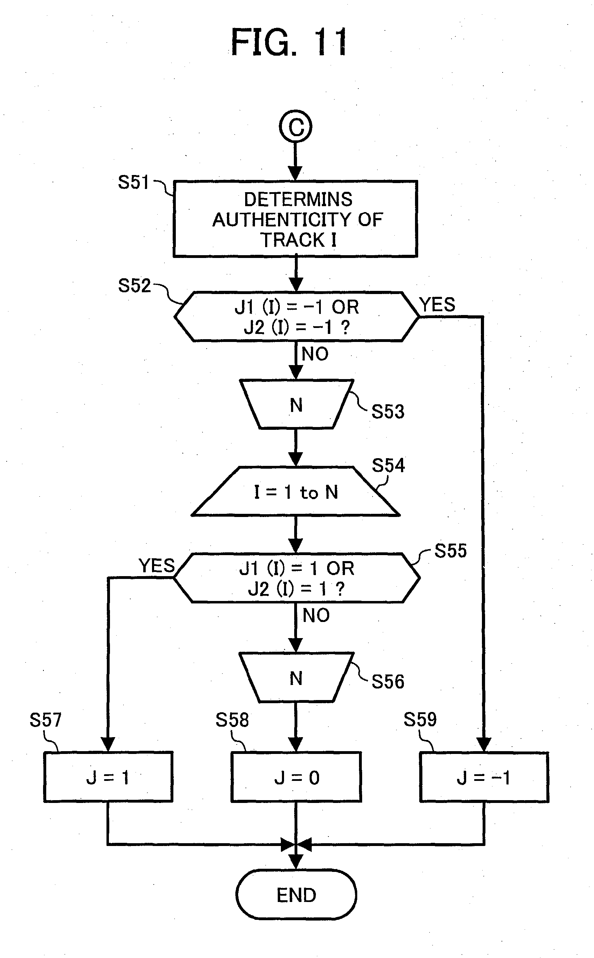

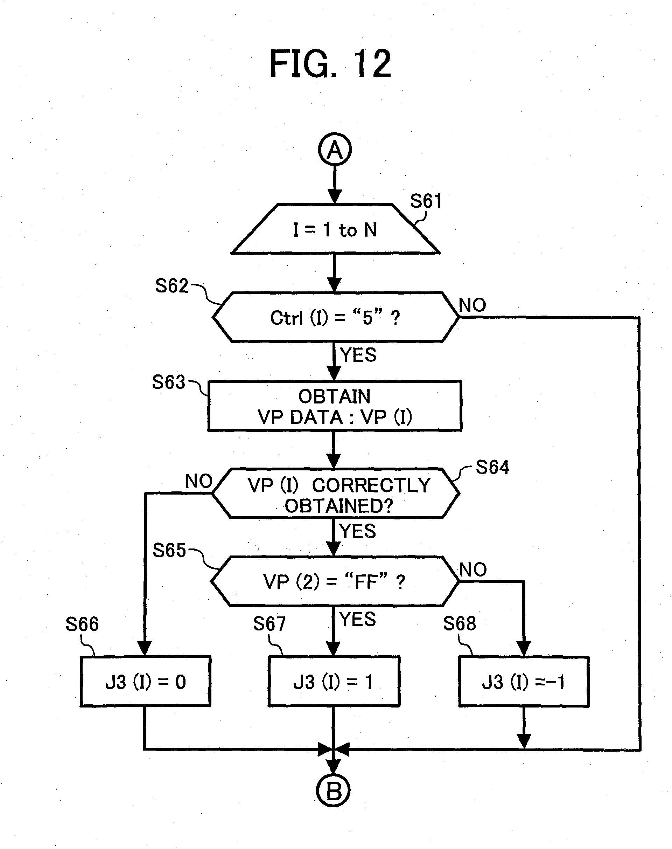

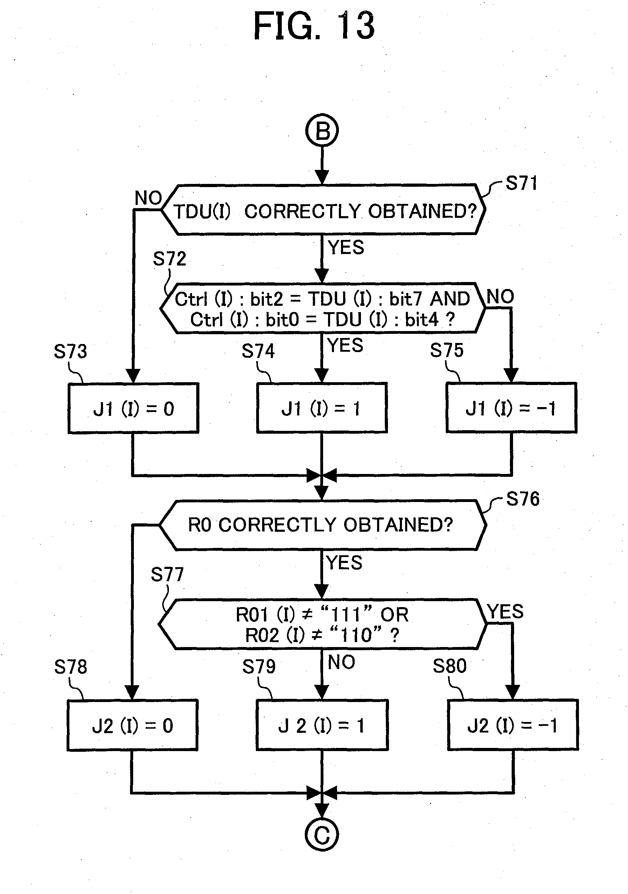

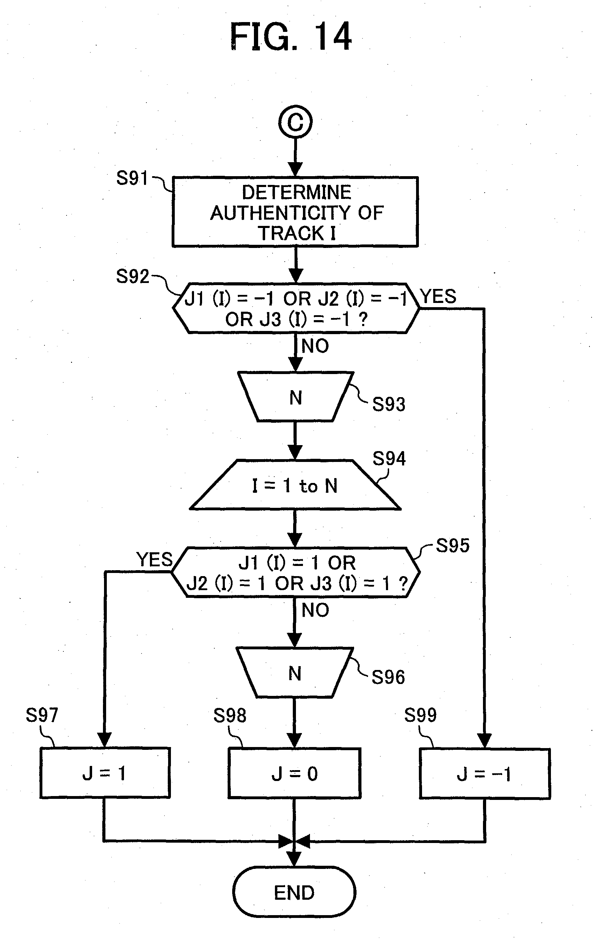

Figs. 8 through 14 are flowcharts illustrating in detail the authentication process of the optical disk 4 shown in Fig. 7.

The process illustrated in Figs. 8 through 11 is a first authentication process of the optical disk 4 in accordance with the present invention and includes a data acquisition step and an authentication step. The process illustrated in Fig. 8, and 12 through 14 is a second authentication process of the optical disk 4 in accordance with the present invention and includes a data acquisition step and an authentication step.

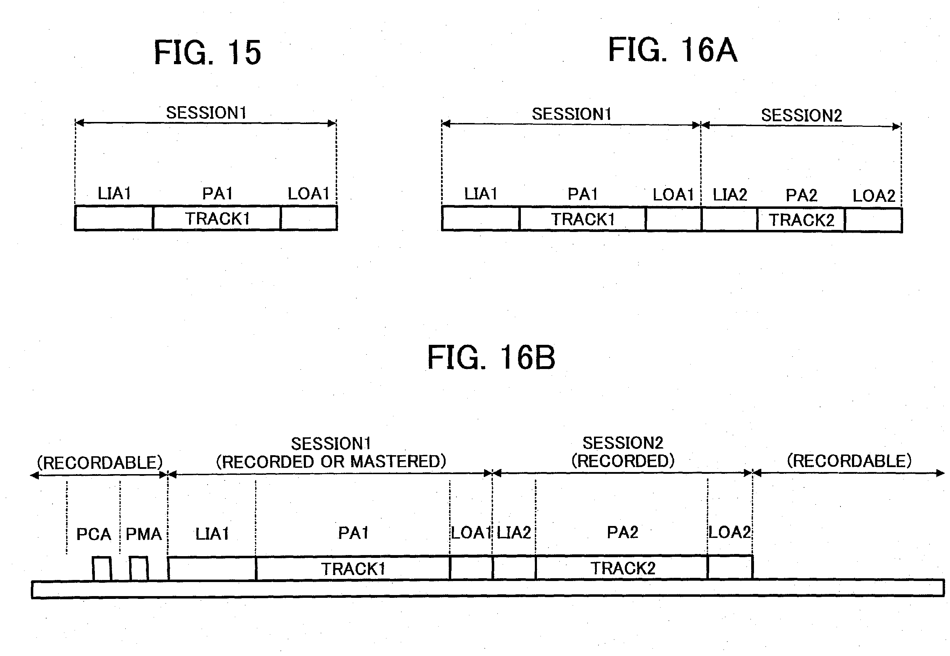

Discussed first is an authentication determination process of an optical disk 4 in accordance with a first preferred embodiment of the present invention. The optical disk 4 has a session 1 with a track 1 that is continuously recorded in a copy protective manner as shown in Fig. 15. The track of the optical disk 4 has the structure (N=1) shown in Fig. 4.

The optical disk 4 has at least two tracks with data recorded in a multi-session. At least one track other than the track 1 of the session 1 is recorded using the UDF. Data serving the authentication determination purpose is recorded in the UDF track.

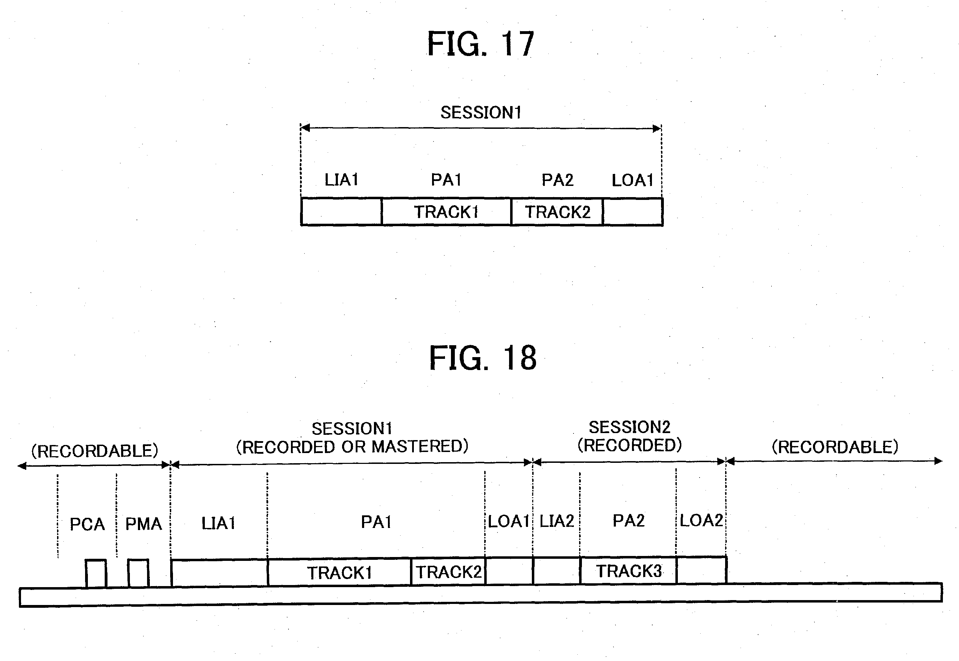

An authorized copy determination module performs the authentication determination process including steps (1)-(5) .
(1) A start address (n) of user data of the track, the length (x) of the user data, and control (Ctrl) are acquired in response to a read TOC command.
(2) TDU is acquired from a user field of the TDB in an address at (n-8) or less in response to a read command.
(3) Block indicators of an RO block in an address at (n+x-2) and (n+x-1) are acquired in response to a read command.
(4) In an authorized disk, Ctrl is "4 (=0100)", and TDU is "80 (=1000-0000)". If Ctrl bit 2 is equal to TDU bit 7, Ctrl bit 0 is equal to TDU bit 5, and Ctrl is "5", "1" (authentic) is obtained. If Ctrl bit 2 is not equal to TDU bit 7, Ctrl bit 0 is not equal to TDU bit 5, or Ctrl is not "5", "-1" (false) is obtained. In the case of a command error, "0" is entered for a variable J 1.
(5) RO 1 is "111" and RO 2 is "110" in an authorized disk. If one of the RO 1 and RO 2 fails to agree with the respective values, "-1" (false) results. If both the RO 1 and the RO 2 agree with the respective values, "1" (authentic) results. In the case of a command error, "0" is entered for a variable J 2.
   In response to an authentication determination command from an application program, the authorized copy determination module performs steps (1)-(5), and provides J 1 and J 2 as return values. The application program authenticates the optical disk referring to the return values based on the following table, and determines a subsequent process depending on security level. 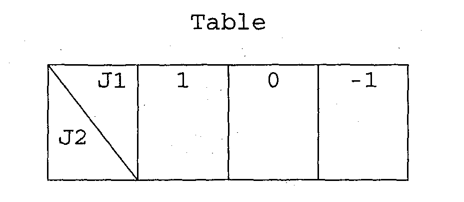 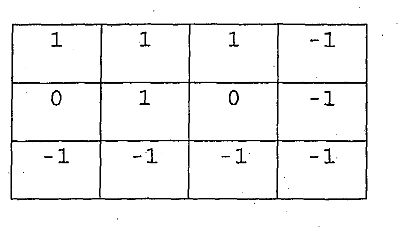
   For example, if the authenticity determination result of the optical disk based on the values of J 1 and J 2 are respectively "1" and "0", the optical disk is determined as having authorized copied data or the optical disk is determined as having the original data recorded, and an application is performed as a process to be performed on an authorized optical disk.
   If the authentication determination result based on the values of J 1 and J 2 is "-1", the optical disk is determined as having unauthorized copied data, and execution of an application is inhibited as a process to be performed on an unauthorized disk.
   In an optical disk authentication process of a second preferred embodiment, the optical disk 4 includes a session 1 having a track 1 with data continuously recorded in a copy protective manner thereon, and a session 2 having a track 2 with data continuously recorded in a copy protective manner thereon as shown in Fig. 16A. The track has the structure shown in Fig. 4 (N=1, 2).
   The optical disk 4 stores a program for causing a computer to execute at least one of two steps. One step is to determine whether the value of the TDU of the pre-gap of each track matches one of the control value of the sub-code of each track and the control value of track information of the TOC, and the other step is to authenticate the optical disk based on whether the runout value of the link portion of each track or each packet is normal.
   An authorized copy determination module for performing an authentication determination process executes steps (6)-(10).
(6) Start addresses of the user data of the track 1 and the track 2, the lengths of user data (x and y), and control (Ctrl 1 and Ctrl 2) are acquired in response to a read TOC command.
(7) TDU 1 is acquired from a user data field of the TDB at an address (n-8) or less in the track 1, and TDU 2 is acquired from a user data field of the TDB at an address (m-8) or less in the track 2 in response to a read command.
(8) In response to a read command, RO block indicators RO 11 and RO 12 of the RO blocks in addresses at (n+x-2) and (n+x-1) in the track 1 are acquired and RO block indicators RO 21 and RO 22 of the RO blocks in addresses at (m+y-2) and (m+y-1) in the track 2 are acquired.
(9) In an authorized disk, the Ctrl 1 and Ctrl 2 are "4 (=0100)", and the TDU 1 and TDU 2 are "80 (=1000-0000)". If Ctrl 1 bit 2 is equal to TDU 1 bit 7, Ctrl 1 bit 0 is equal to TDU 1 bit 5, and Ctrl 1 is "5", "1" (authentic) is obtained. If Ctrl 1 bit 2 is not equal to TDU 1 bit 7, Ctrl 1 bit 0 is not equal to TDU 1 bit 5, or Ctrl 1 is not "5", "-1" (false) is obtained. In the case of a command error, "0" is entered for a variable J 11.
   If Ctrl 2 bit 2 is equal to TDU 2 bit 7, Ctrl 2 bit 0 is equal to TDU 2 bit 5, and Ctrl 2 is "5", "1" (authentic) is obtained. If Ctrl 2 bit 2 is not equal to TDU 2 bit 7, Ctrl 2 bit 0 is not equal to TDU 2 bit 5, or Ctrl 2 is not "5", "-1" (false) is obtained. In the case of a command error, "0" is entered for a variable J 12.
   If one of J 11 and J 12 is "-1", "-1" (false) is obtained. If both J 11 and J 12 are "1", "1" (authentic) is obtained. In other cases, "0" is entered for the variable J 1.
(10) In an authorized disk, RO 11 and RO 21 are "111", and RO 12 and RO 22 are "110". If any of RO 11, RO 12, RO 21, and RO 22 fails to agree with the respective value, "-1" (false) is obtained. If all RO 11, RO 12, RO 21, and RO 22 agree with the respective values thereof, "1" (authentic) is obtained. In the case of a command error, "0" is entered for the variable J 2.
   In response to an authentication determination command from an application program, the authorized copy determination module performs steps (6)-(10), and provides J 1 and J 2 as return values. The application program authenticates the optical disk referring to the return values based on the table, and determines a subsequent process depending on security level.
   For example, if the authentication determination result of the optical disk based on the values of J 1 and J 2 are respectively "1" and "0", the optical disk is determined as having authorized copied data or the optical disk is determined as having the original data recorded, and an application is performed as a process to be performed on an authorized optical disk.
   If the authentication determination result based on the values of J 1 and J 2 is "-1", the optical disk is determined as having unauthorized copied data, and execution of an application is inhibited as a process to be performed on an unauthorized disk.
   The second preferred embodiment performs the determination of the first preferred embodiment twice, thereby enhancing reliability of determination.
   In an optical disk authentication process in a third preferred embodiment, the optical disk 4 includes a session 1 having a track 1 with data continuously recorded in a copy protective manner thereon, and a track 2 with data continuously recorded in a copy protective manner thereon as shown in Fig. 17. The optical disk 4 stores a program for causing a computer to execute an authorized copy determination step based on the fact that the UDF track data is correct (namely, a predetermined value).
   Since a single session is used in accordance with the third preferred embodiment, no overhead due to the recording of the lead-in and the lead-out occurs.
   In an optical disk authentication process in accordance with a fourth preferred embodiment, the optical disk 4 is identical to the one of the third preferred embodiment except that the track 2 has data recorded in the VP in a copy protective manner.
   In the VP copy-protected track 2, the normal value of Ctrl 2 is "5 (=0101)", and the normal value of TDU 2 is "90 (=1001-0000)".
   The optical disk is a hybrid one with data recorded with ROM pits.
   The optical disk of the fourth preferred embodiment of the present invention has a track structure different from a standard CD-ROM (shown in Fig. 16), and presents difficulty in unauthorized copying in the DAO. With more determination means, the reliability of determination is enhanced.
   In an optical disk authentication process in accordance with a fifth preferred embodiment of the present invention, the optical disk 4 contains an authentication determination data of repeated "FF" in a user data field of a head packet in a track 2 having data recorded in a VP and a copy-protected manner.
   An authorized copy determination module performs the authentication determination process including steps (11)-(17).
(11) Start addresses (n and m), the lengths (x and y), and control (Ctrl 2 and Ctrl 2) of user data of the track 1 and track 2 are acquired in response to a read TOC command.
(12) In response to a read command, TDU 1 is acquired from a user field of the TDB in an address at (n-8) or less in the track 1, and TDU 2 is acquired from a user field of the TDB in an address at (m-8) or less in the track 2.
(13) In response to a read command, block indicators of RO 11 and RO 12 of RO blocks in addresses at (n+x-2) and (n+x-1) in the track 1 are acquired, and block indicators of RO 21 and RO 22 of RO blocks in addresses at (m+y-2) and (m+y-1) in the track 2 are acquired.
(14) In an authorized disk, Ctrl 1 and Ctrl 2 are "4 (=0100)", and TDU 1 and TDU 2 are "80 (=1000-0000)". In the track 2 having data recorded in the VP and in a copy-protected manner, the normal value of Ctrl 2 is "5 (=0101)", and the normal value of TDU 2 is "90 (=1001-0000)".
   If Ctrl 1 bit 2 is equal to TDU 1 bit 7, Ctrl 1 bit 0 is equal to TDU 1 bit 5, and Ctrl 1 is "5", "1" (authentic) is obtained. If Ctrl 1 bit 2 is not equal to TDU 1 bit 7, Ctrl 1 bit 0 is not equal to TDU 1 bit 5, or Ctrl 1 is not "5", "-1" (false) is obtained. In the case of a command error, "0" is entered for a variable J 11.
   If Ctrl 2 bit 2 is equal to TDU 2 bit 7, Ctrl 2 bit 0 is equal to TDU 2 bit 5, and Ctrl 2 is "5", "1" (authentic) is obtained. If Ctrl 2 bit 2 is not equal to TDU 2 bit 7, Ctrl 2 bit 0 is not equal to TDU 2 bit 5, or Ctrl 2 is not "5", "-1" (false) is obtained. In the case of a command error, "0" is entered for a variable J 12.
   If one of J 11 and J 12 is "-1", "-1" (false) is obtained. If both J 11 and J 12 are "1", "1" (authentic) is obtained. In other cases, "0" is entered for the variable J 1.
(15) In an authorized disk, RO 11 and RO 21 are "111", and RO 12 and RO 22 are "110". If any of RO 11, RO 12, RO 21, and RO 22 fails to agree with the respective value, "-1" (false) is obtained. If all RO 11, RO 12, RO 21, and RO 22 agree with the respective values thereof, "1" (authentic) is obtained. In the case of a command error, "0" is entered for the variable J 2.
(16) A user data field of the address of any user data block in the track 2 is acquired in response to a read command.
(17) If the user data field is not the authentication determination data of repeated "FF", "-1" (false) is obtained. If the user data field is the authentication determination data, "1" (authentic) is obtained. In the case of a command error, "0" is entered for a variable J 3.

In response to an authorized copy determination command from an application program, the authorized copy determination module performs steps (11)-(17), and provides J 1, J 2 and J 3 as return values. The application program authenticates the optical disk referring to the return values, and determines a subsequent process depending on security level.

It is difficult to set all data to "FF" in a head packet in the optical disk having data recorded using a packet write software program. The fifth preferred embodiment of the present invention thus prevents the packet write software program from using unauthorized copied data.

In accordance with the fifth preferred embodiment of the present invention, the repetition of "FF" is used as authentication criterion data. A repetition of any character string of two byte codes may be used.

The value of the authentication criterion data may be recorded as a constant on the authorized copy determination module. Alternatively, the value of the authentication criterion data may be input in a file or using a keyboard.

Depending on PC environments or drives, the commands may be in error or the commands may be blocked on software programs.

In the first through fifth preferred embodiments of the present invention, the return value in the case of the command error is set to be "0". Alternatively the return value may be set to be "-1" depending on security level.

In an optical disk authentication determination process of an optical disk in accordance with the sixth preferred embodiment of the present invention, the optical disk 4 has a disk layout shown in Fig. 18.

As shown, the optical disk 4 includes a session 1 and a session 2. The session 1 is a read-only memory area, and the session 2 is a random-access memory area. The session 1 contains a track 1 having a program of the six preferred embodiment of the present invention recorded thereon and a track 2 (a dummy track) not present in the ISO 9660 file system.

Each session includes a lead-in area (LIA), a program area (PA), and a lead-out area (LIA). The PA includes at least one track.

Recorded on the TOC of the LIA of each track are a control (CT) and ADR representing the recording method of the track of each session, and time information representing a recording position (ST) of the track. The same information is also recorded in a program memory area (PMA) at an inner circle of the LIA in the session 1.

The process of the optical disk system in accordance with the present invention is now described.

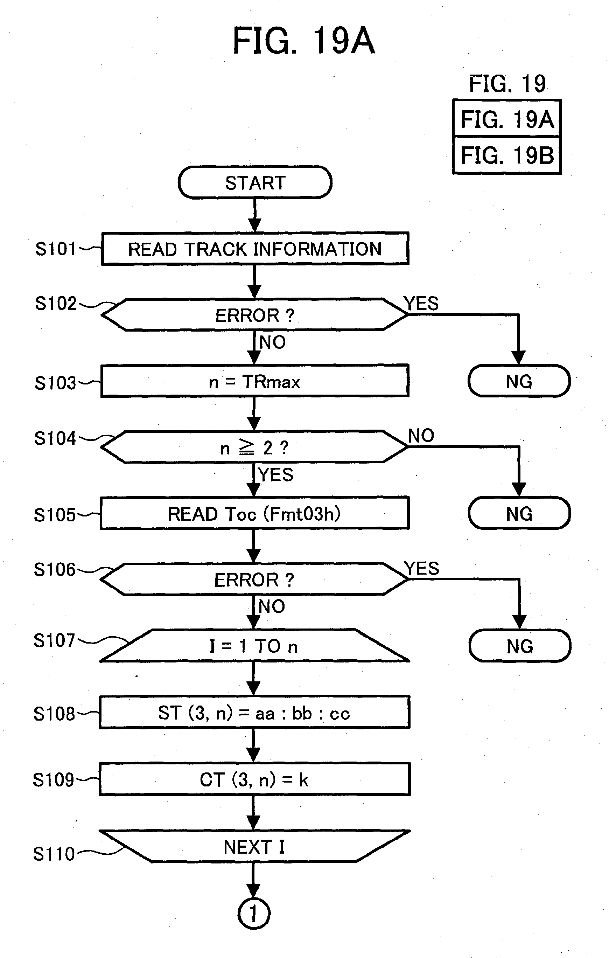

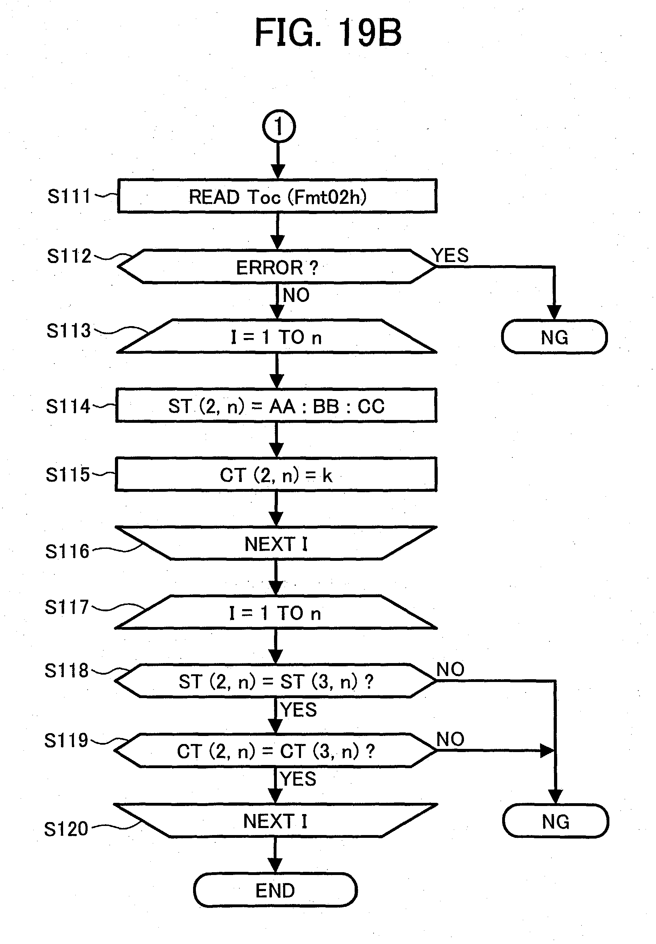

Fig. 19 is a flowchart of an optical disk authentication process of an optical disk shown in Fig. 18.

An authorized copy determination module for executing an authorized copy determination process performs steps S101-S120.

In steps S101-S102, a maximum number of tracks (TRmax) is acquired in response to a read disk information command.

In steps S105-S110, track information (CT and ST) of the PMA is acquired in response to a read TOC (Fmt 03) command.

In steps S111-S116, track information (CT and ST) of the TOC is acquired in response to a read TOC (Fmt 02) command.

In steps S117-S120, track information of the PMA is compared with track information of the TOC.

The track 2 (dummy track) non-existent in the ISO 9660 file system cannot be copied in the TAO, and the PMA cannot be copied in the DAO. With the authentication determination method for authenticating the recording medium, the computer program for the authentication determination method, and the computer readable recording medium, the data that has been illegally copied onto the recording medium such as an optical disk is prevented from being used.

In the disks of the preferred embodiments of the present invention, the TAO track is formed as the track 2. Alternatively, a VP (variable packet) track may be formed as the track 2. In this arrangement, the formation of the track 2 becomes even more difficult through a copying operation.

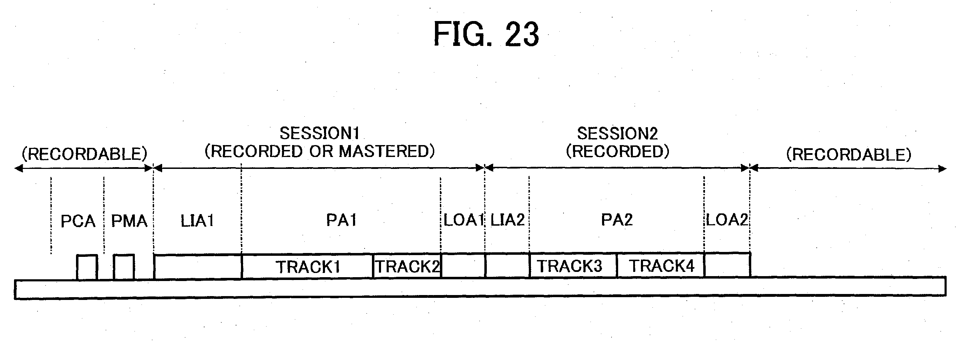

In an optical disk authentication process in accordance with a seventh preferred embodiment of the present invention, the optical disk 4 has a disk layout as shown in Fig. 23.

As shown, the optical disk 4 includes a session 1 and a session 2. The session 1 is a read-only memory area, and the session 2 is a random-access memory area.

Each session includes a lead-in area (LIA), a program area (PA), and a lead-out area (LIA). The PA includes two tracks.

Since the file system typically recognizes the first track only in each session, a known multi-session optical disk is recorded in a format with one track per session as shown in Fig. 16B.

The optical disk of the seventh preferred embodiment of the present invention includes tracks 1 and 3 where data recording is performed in a track at once method, and tracks 2 and 4 where data recording is performed in a packet write method.

Information of the two tracks of the session 1 is recorded onto the PMA in a read-only memory method. Information of the two tracks of the session 2 is written together with a disk ID by the drive during an additional recording of the session 2.

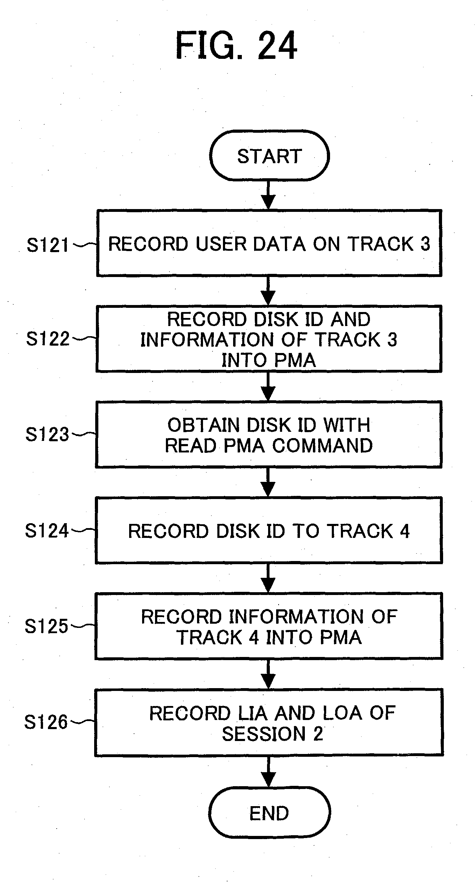

Fig. 24 illustrates the operation of a recording software program that functions to additionally record the user data onto the session 2 of the optical disk 4.

In step S121, the user data is recorded onto the track 3. In step S122, the disk ID and the information of the track 3 are recorded. In step S123, the disk ID is acquired in response to a read PMA command. In step S124, the disk ID is recorded onto the track 4. In step S125, the information of the track 4 is recorded onto the PMA. In step S126, the LIA and LOA of the session 2 are recorded.

Data such as "FF" is recorded in the track 2 as data unique to a stamper. The recording software program acquired in response to the read PMA command records, as data unique to each disk, the disk ID that is attached to each disk in a random fashion during recording. Since the disk ID is randomly attached to each disk by the drive during recording, copying the disk ID is difficult.

In the authentication determination process, the data of the second track is acquired in response to a read CD command. If the data is not "FF", the optical disk 4 is determined as being an unauthorized disk. The disk ID is acquired from the PMA in response to a read PMA command, and the data of the track 4 is acquired in response to a read CD command. If the disk ID acquired from the PMA and the data of the track 4 fail to agree, the optical disk 4 is determined as being an unauthorized disk.

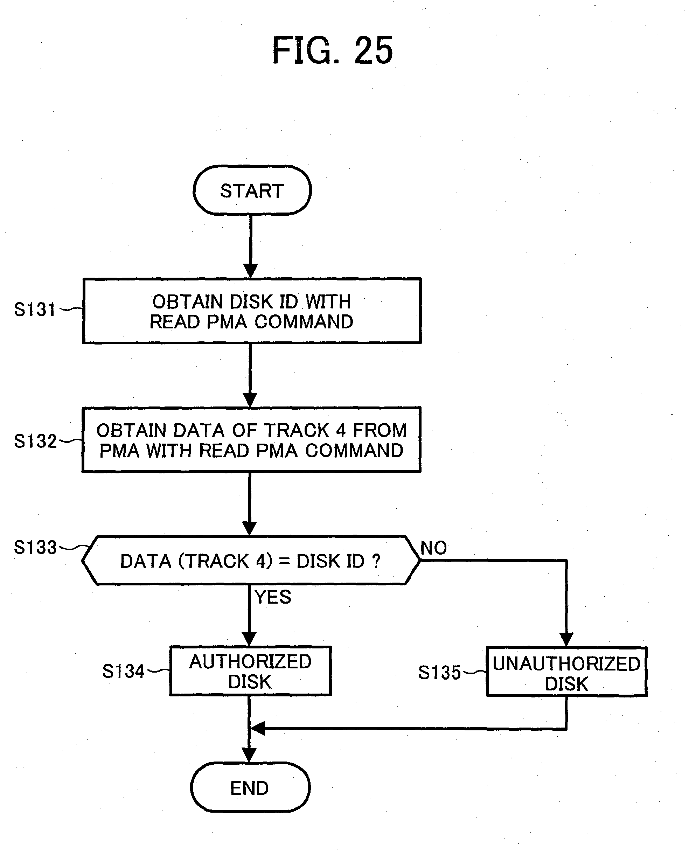

Fig. 25 is a flowchart illustrating the optical disk authentication process of the optical disk 4 illustrated in Fig. 23.

In the authorized copy determination process, the disk ID is acquired in response to a read PMA command in step S131. In step S132, the data of the track 4 is acquired from the PAM in response to a read CD command. In step S133, it is determined whether the data of the track 4 agrees with the disk ID. If it is determined that the data of the track 4 agrees with the disk ID, the process proceeds to step S134. The optical disk is thus determined as being an authentic optical disk or an optical disk the use of which is authorized. If it is determined that the data of the track 4 fails to agree with the disk ID, the process proceeds to step S135. The optical disk is thus determined as being a false optical disk or an illegally copied disk.

Depending on PC environments or drives, the commands may be in error or the commands may be blocked on software programs. The command error may be determined as being "false" depending on security level.

In the above-referenced preferred embodiments of the present invention, an application software program is stored in the optical disk together with the authorized copy determination means. The application software program may be stored in the hard disk drive or a network server.

In the optical disk 4 in accordance with the first through seventh preferred embodiments of the present invention, the application software program may be recorded onto the CD-R(RW) using a write software program. Alternatively, a disk having the application software program recorded beforehand thereon is coated with a colorant layer, as a recording layer, a reflective layer, and a protective layer. This arrangement substantially heightens manufacturing yield of the disks.

The authentication determination method of the recording medium, the computer program, and the computer readable recording medium in accordance with the preferred embodiments of the present invention are applicable to personal computers such as a desktop personal computer, or a notebook personal computer.

Numerous additional modifications and variations are possible in light of the above teachings. It is therefore to be understood that within the scope of the appended claims, the disclosure of this patent specification may be practiced otherwise than as specifically described herein.

## Claims

1. A method for authenticating a recording medium, the method comprising the steps of:
acquiring, from the recording medium, unique data that is recorded on an information track on the recording medium in accordance with a predetermined rule; and
authenticating the recording medium based on the unique data acquired in the data acquisition step.

2. A method according to claim 1, wherein the predetermined rule is based on a plurality of types of recording methods.

3. A method according to claim 2, therein the plurality of types of recording methods comprises an uninterrupted recording method and an incremental recording method.

4. A method according to claim 3, wherein the uninterrupted recording method is a track at once recording method, and the incremental recording method is a packet write recording method.

5. A method according to claim 1, wherein the unique data comprises information for identifying the recording method.

6. A method according to claim 1, wherein the unique data comprises at least one of data in a track descriptor unit and data in a sub-code control.

7. A method according to claim 1, wherein the unique data comprises data within a runout.

8. A method according to claim 1, wherein the unique data comprises data within a predetermined packet.

9. A method according to claim 1, wherein the unique data comprises data that is recorded in multiple sessions.

10. A method according to claim 1, wherein the unique data comprises data that is recorded in a variable packet.

11. A method for authenticating a recording medium, the method comprising the steps of:
acquiring, from the recording medium, unique data that is recorded in a variable packet on an information track on the recording medium in accordance with a predetermined rule; and
authenticating the recording medium based on the unique data acquired in the data acquisition step.

12. A method according to claim 11, wherein the recording medium has, in a first session, a second track as a dummy track not present in the ISO 9660 file system and wherein the information track comprises an LIA and a PMA.

13. A method according to claim 12, wherein the unique data comprises track information.

14. A method according to claim 13, wherein the track information identifies a recording method of the track.

15. A method according to claim 14, wherein the track information identifies a recording position of the track.

16. A method according to claim 12, wherein the recording medium records data in multiple sessions.

17. A method according to claim 16, wherein the information track comprises a PMA and a second track that is additionally recorded.

18. A method according to claim 17, wherein the unique data of the second track that is additionally recorded comprises a disk ID.

19. A computer program for causing a computer to perform an instruction for authenticating a recording medium, the instruction comprising the steps of:
acquiring, from the recording medium, unique data that is recorded on an information track on the recording medium in accordance with a predetermined rule; and
authenticating the recording medium based on the unique data acquired in the data acquisition step.

20. A computer readable recording medium storing a computer program for causing a computer to perform an instruction for authenticating a recording medium, the instruction comprising the steps of:
acquiring, from the recording medium, unique data that is recorded on an information track on the recording medium in accordance with a predetermined rule; and
authenticating the recording medium based on the unique data acquired in the data acquisition step.

21. A computer readable recording medium comprising a read-only memory area and a read and write memory area, and storing, on the read and write area, a computer program for causing a computer to perform an instruction for authenticating a recording medium, the instruction comprising the steps of:
acquiring, from the recording medium, unique data that is recorded on an information track on the recording medium in accordance with a predetermined rule; and
authenticating the recording medium based on the unique data acquired in the data acquisition step.

22. An optical disk drive system, comprising:
a memory storing a program; and
a processor configured to execute the program stored in the memory,
wherein the program includes an instruction for authenticating a recording medium, the instruction comprising the steps of:
acquiring, from the recording medium, unique data that is recorded on an information track on the recording medium in accordance with a predetermined rule; and
authenticating the recording medium based on the unique data acquired in the data acquisition step.
